(19) Europäisches Patentamt
European Patent Office
Office européen des brevets

(11) **EP 3 229 197 A1**

(12) **DEMANDE DE BREVET EUROPEEN**

(43) Date de publication:
**11.10.2017 Bulletin 2017/41**

(51) Int Cl.:
**G06Q 30/06** *(2012.01)*    **G06Q 50/16** *(2012.01)*

(21) Numéro de dépôt: **17165626.7**

(22) Date de dépôt: **07.04.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **08.04.2016  FR 1600599**

(71) Demandeur: **Duault, Maurice**
**06800 Cagnes sur Mer (FR)**

(72) Inventeur: **Duault, Maurice**
**06800 Cagnes sur Mer (FR)**

(74) Mandataire: **Schuffenecker, Thierry**
**120 Chemin de la Maure**
**06800 Cagnes sur Mer (FR)**

(54) **RECOMMANDATIONS POUR AMÉLIORER L'EFFICACITÉ DES TRANSACTIONS IMMOBILIÈRES**

(57)    Procédé pour générer des recommandations pour un moteur de recherche d'un serveur web accédant à au moins une base de données (108) de produits/services commercialisés, ladite au moins une base de données comprenant une première base de données de produits/services commercialisés et une deuxième base de données d'utilisateurs, lesdits utilisateurs surfant sur le serveur web dans le but d'obtenir une liste de produits/services extraits de ladite base de données (108) ;
Le processus implique les étapes de :
- générer un profil d'offre incluant un ensemble prédéfini de critères et de données affectés auxdits critères ;
- générer un profil de demande dédié à un utilisateur potentiel ou acheteur de produits/services compris dans ladite deuxième base de données ;
- exécuter un algorithme de score entre un profil de demande particulier et un profil d'offre particulier, ledit algorithme générant un score de transaction qui est représentatif du niveau de correspondance dudit profil de demande particulier avec ledit profil d'offre particulier ;
dans lequel ledit processus comprend de plus les étapes de :
a) modifier automatiquement les données attribuées à au moins un critère d'un profil d'offre ou de demande;
b) appliquer ledit algorithme de score audit profil d'offre ou de demande modifié avec des profils de demande ou d'offre extraits de ladite deuxième ou première base de données, respectivement,;
c) enregistrer le résultat dudit algorithme de score ;
d) réitérer lesdites étapes a)-c) pour des modifications supplémentaires desdits profils d'offre ou de demande et pour des critères additionnels.

Fig.1A

EP 3 229 197 A1

108 — Base de données

109 — Site d'annonces

111 — Application d'annonces d'offre

Annonces d'offre — 110

100

101 — 102 — Système — 104 — 103

Profils de demande

Application de demande

Application d'offre

Profils d'offre

105 —

106 —

107 —

12 —

11 — Utilisateur demandeur

Agent or promoteur immobilier

Utilisateur annonceur — 17

Fig.1B

## Description

### Domaine technique

L'invention se rapporte au domaine des télécommunications et notamment un procédé de télécommunication destiné à améliorer l'efficacité des transactions sur les sites Web.

### Etat de l'art

L'état de la technique comporte bon nombre de brevets et demandes de brevets destinés à développer les transactions à distance, et notamment permettant des recommandations à des utilisateurs appelés filtrages collaboratif. Les systèmes connus se distinguent en deux grande familles :

1)Filtrage collaboratif client :

Il consiste à prédire l'intérêt d'un utilisateur u' pour un produit P à partir d'un ensemble U d'utilisateurs. Le procédé consiste à récupérer parmi les utilisateurs de U, ceux qui ont attribué une note n au produit P. Le système cherche le score de similarité entre l'utilisateur u' et chaque utilisateur u, et on en déduit une note pour chaque produit. Il recommande le produit dont la note est la plus élevée.

2)Filtrage collaboratif produit :

Il est plus simple à mettre en place que le filtrage client. Il consiste à se baser sur toutes les notes attribuées par l'utilisateur à des produits pour lui en suggérer d'autres.

Ce système nécessite d'avoir un score d'association entre chaque produit, de telle sorte que lors d'un achat, le système proposera à l'utilisateur des produits ayant un score d'association élevé. En revanche, ce score d'association ne doit pas être confondu avec la similarité entre deux profils. Dans le cas du cross-selling, le système suggère des achats complémentaires du type : pour l'achat d'un téléphone, une housse de protection est suggérée. Les produits ne sont donc pas similaires mais complémentaires (et donc associés).

Ces méthodes de recommandations fonctionnent bien pour des sites marchands proposant des produits industriels à grande échelle. Elles fonctionnent beaucoup moins bien pour des sites proposant des produits originaux ou uniques. C'est le cas des ventes ou locations immobilières, des réservations touristiques, et des ventes de produits d'occasion.

D'autre part, ces méthodes ne permettent pas de faire des recommandations à leur propriétaire de modifications de produit ou de service commercialisé afin d'augmenter ses chances de vente.

Par conséquent, nous proposons une nouvelle méthode de recommandation basée sur la pertinence du marché du site Web.

Chaque utilisateur est associé à un profil de demande enregistré dans une base de données du site. Chaque produit ou service est associé à un profil d'offre enregistré dans cette base de données, ainsi qu'un niveau d'intérêt du marché et un prix. Un score estime le niveau d'association entre un profil d'offre et de demande. L'objectif des recommandations est de proposer à l'utilisateur des modifications de son profil de demande, et/ou de proposer au propriétaire du produit ou service commercialisé des modifications de son profil d'offre, afin de maximiser la pertinence de ce profil par rapport au marché du site Web.

### Résumé de l'invention

C'est un premier objet de l'invention de réaliser un procédé et un système pour fournir des recommandations à un utilisateur de site web commercialisant des produits ou des services afin d'augmenter la pertinence de son profil de demande par rapport au marché du site Web.

C'est un objet supplémentaire de l'invention de réaliser un procédé et un système générant des recommandations à un propriétaire de produit ou service commercialisé dans un site web afin d'augmenter la pertinence de son profil d'offre par rapport au marché du site Web.

C'est un troisième objet de l'invention de fournir un procédé et un système permettant, pour un propriétaire d'une propriété déjà construite, de générer des recommandations en matière de rénovations (ce qui est couramment désigné sous l'appellation anglo-saxonne *"home staging"*) qui correspondent à des modifications de profil d'offre qui maximisent la pertinence des rénovations par rapport au marché, et les gains du propriétaire de l'offre.

C'est encore un autre objet de l'invention présente de fournir, pour un promoteur immobilier, un processus et un système qui peut recommander des caractéristiques de lots qui correspondent à des profils de demandes de lots, et des répartitions de lots qui maximisent la pertinence de la construction par rapport au marché, et aux gains du promoteur immobilier.

Ces objets sont réalisés grâce à un procédé permettant de générer des recommandations pour un site web accédant à au moins une base de données de produits/services commercialisés. La base de données comprend une première base de données de produits/services commercialisés et une deuxième base de données d'utilisateurs qui peuvent surfer sur le serveur web dans le but d'obtenir une liste de produits/services commercialisés extraites de la base de données.

Le procédé comporte les étapes :

- générer un profil d'offre dédié à un produit/service compris dans une première base de données de produits/services commercialisés et décrivant ledit produit/service commercialisé. Le profil d'offre inclut un ensemble prédéfini de critères et de données affectées aux dits critères ;

- générer un profil de demande dédié à un utilisateur potentiel ou acquéreur potentiel, lequel est compris dans une deuxième base de données décrivant les besoins dudit utilisateur ou acquéreur potentiel pour son projet. Le profil de demande inclut un ensemble prédéfini de critères et de données affectées aux dits critères ;

- exécuter un algorithme de calcul de score entre un profil de demande particulier et un profil d'offre particulier.

L'algorithme de score génère un score de transaction qui est représentatif du niveau d'association dudit profil de demande particulier avec ledit profil d'offre particulier.

Le procédé comprend en outre les étapes de :

a) modifier automatiquement les données attribuées à au moins un critère d'un profil d'offre ou de demande de manière à générer un profil modifié d'offre ou de demande ;
b) appliquer l'algorithme de score audit profil d'offre ou de demande modifié avec des profils de demande ou d'offre extraits de la seconde ou de la première base de données respectivement, de manière à générer un score modifié représentatif de l'association avec le profil d'offre ou de demande modifié ;
c) enregistrer le résultat de l'algorithme de score ;
d) réitérer lesdites étapes a)-c) pour des modifications supplémentaires desdits profils d'offre ou de demande et pour des critères additionnels.

Dans un mode de réalisation particulier, le profil d'offre ou de demande est affiché à un utilisateur avec des recommandations concernant les données des critères qui devrait être améliorés pour maximiser le score de transaction.

Dans un autre mode de réalisation spécifique, l'algorithme de score est configuré pour générer un niveau de pertinence pour un profil d'offre et/ou de demande donné, respectivement en ce qui concerne les projets de demande enregistrés dans ladite seconde base de données et/ou les propriétés d'offre enregistrées dans ladite première base de données.

De préférence, le niveau de pertinence est une pertinence de demande intégrant un nombre limité des scores les plus élevés entre le profil de demande et les profils d'offre des produits/services enregistrées dans ladite première base de données.

Dans un autre mode de réalisation, le niveau de pertinence est une pertinence d'offre combinant les gains financiers qui sont attendus d'être aussi élevés que possible et l'effort de construction ou rénovation qui est attendu d'être aussi bas que possible.

Le procédé montre une grande flexibilité et peut être utilisé par un acquéreur potentiel d'une propriété immobilière, par un propriétaire immobilier et même par un promoteur immobilier qui souhaiterait recevoir des recommandations par rapport à des caractéristiques éventuelles de lots (profils de lots, et répartition de lots) maximisant la pertinence de la construction par rapport au marché, et aux gains du promoteur immobilier.

Le procédé peut même être utilisé pour fournir des recommandations pour des changements éventuels de zone géographique pour un acheteur de propriété éventuel ou un utilisateur d'un site de réservation touristique. A cet égard, dans un mode de réalisation, le procédé comprend les étapes :

- générer un profil de zone source dédiée à un acquéreur potentiel d'une propriété immobilière ou un utilisateur d'un site de réservation touristique comprenant des données à attribuer un ensemble de critères pour transaction, décrivant les caractéristiques de la zone source ;
- générer un profil de zone alternative ;
- générer un score de zone entre un profil particulier de zone source et un profil particulier de zone alternative révélateur du niveau d'association entre le profil de zone source et le profil de zone alternative ;

En conséquence des étapes précédentes, le processus est capable d'établir une liste de zones alternatives ayant les scores de zones les plus élevés.

De préférence, le processus établit une liste de zones alternatives ayant la pertinence de demande la plus élevée.

Alternativement, le processus est configuré pour augmenter automatiquement la distance par rapport à la localisation source jusqu'à un seuil où le niveau de la pertinence de la demande ou la distance maximale est atteinte.

Dans un mode de réalisation, la modification des données résulte d'une variation de la valeur d'un critère à l'intérieur d'un intervalle autour de la valeur source du critère qui maximise l'augmentation de la pertinence.

Dans un mode de réalisation, le processus établit une liste de critères avec une augmentation maximale de pertinence de demande, ou une valeur maximale de dérivée de pertinence de demande.

De préférence, la valeur du critère est calculée à l'intérieur d'un intervalle autour de la valeur source du critère qui fournit la variation positive maximale de pertinence d'offre.

Dans un mode de réalisation, le processus établit une liste de critères avec une variation maximale de pertinence d'offre ou une dérivée maximale de pertinence d'offre.

Dans un mode de réalisation particulier, l'algorithme de score est appliqué à un profil de programme immobilier décrivant les caractéristiques d'un programme immobilier et des lots aux fins d'optimiser ladite pertinence des lots pour le promoteur immobilier.

De préférence, l'algorithme de score est appliqué pour estimer le pourcentage de répartition de la demande par type de lot basé sur le pourcentage de répartition de la demande dans la localisation pour chaque lot spécifique.

L'invention réalise aussi un système pour un site Web qui comprend :

- une application d'offre qui permet à un propriétaire d'offrir des produits/services commercialisés ;
- une application de demande qui permet à un utilisateur d'acheter ou louer les produits/services commercialisés ;
- une première base de données de produits/services commercialisés; et
- une deuxième base de données d'utilisateurs souhaitant acheter ou louer les produits/services commercialisés ;
- des moyens pour générer un profil d'offre dédié à un produit/service inclu dans ladite première base de données et qui est offert à la vente ou à la location et décrivant ledit produit/service d'offre à la vente ou à la location, ledit profil d'offre contenant un ensemble prédéfini de critères et de données affectées auxdits critères ;
- des moyens pour générer un profil de demande dédié à un utilisateur ou acheteur de produit/service inclus dans ladite seconde base de données et décrivant les besoins dudit utilisateur ou acheteur de produit/service pour son projet, ledit profil de demande inclut ledit ensemble prédéfini de critères et de données affectées auxdits critères ;
- des moyens pour exécuter un algorithme de score entre un profil particulier de demande et un profil particulier d'offre, ledit algorithme de score générant un score de transaction qui soit représentatif du niveau de correspondance dudit profil de demande particulier avec ledit profil d'offre particulier ;

En outre, le système comprend :

a) des moyens pour modifier automatiquement les données attribuées à au moins un critère d'un profil d'offre ou de demande de manière à générer un profil amendé d'offre ou de demande ;
b) des moyens pour appliquer l'algorithme de score audit profil d'offre ou de demande amendé avec des profils de demande ou d'offre extraits de ladite deuxième ou première base de données respective, de manière à générer un score amendé représentatif dudit profil d'offre ou de demande amendé ;
c) des moyens pour enregistrer le résultat dudit algorithme de score ;
d) des moyens pour réitérer lesdites étapes a)-c) pour des modifications supplémentaires desdits profils d'offre ou de demande et pour des critères additionnels.

**Description des dessins**

D'autres caractéristiques d'un ou plusieurs modes de réalisation de l'invention vont apparaitre à partir de la description suivante des modes de réalisation de l'invention, avec des références faites aux dessins accompagnants.

**FIG.1**a est une figure illustrative montrant le principe des recommandations basées sur la pertinence du marché du site Web.

**FIG.1b** est un diagramme d'un mode de réalisation préféré de l'invention présentée, illustrant la configuration réseau du système.

**FIG.2a** est un diagramme des étapes de l'utilisateur d'offre.

**FIG.2b** est un diagramme des étapes de l'utilisateur de demande.

**FIG.3** est un diagramme illustrant les facteurs et les critères de profil

**FIG.4** est un diagramme illustrant les étapes de recherche

**FIG.5** est un diagramme illustrant une opération d'Intérêt du Marché, en fonction de l'offre, la demande, la position, le prix estimé et le prix publié.

**FIG.6** est un diagramme illustrant une opération d'estimation de temps de transaction, en fonction de l'offre, la demande, la position, le prix estimé et le prix publié.

**FIG.7a** est un diagramme illustrant une opération d'estimation de prix, en fonction de la contribution moyenne des critères

**FIG.7b** est un diagramme illustrant une opération d'estimation de prix, en fonction de l'Intérêt du Marché

**FIG.8** est un diagramme illustrant une fonction du nombre de correspondances de transactions

**FIG.9** est un organigramme illustrant une méthode pour initialiser la modification de la localisation pour l'utilisateur de demande

**FIG.10** est un organigramme illustrant une méthode pour initialiser la modification de la distance pour l'utilisateur de demande

**FIG.11** est un organigramme illustrant une méthode pour initialiser la modification d'autres critères pour l'utilisateur de demande

**FIG.12** est un organigramme illustrant une méthode pour finaliser les recommandations pour l'utilisateur de demande

**FIG.13** est un diagramme illustrant une fonction de l'effort de construction.

**FIG.14** est un organigramme illustrant une méthode pour améliorer la valorisation immobilière pour l'utilisateur d'offre

**FIG.15** est un organigramme illustrant une méthode pour optimiser les caractéristiques des lots pour le promoteur immobilier

**FIG.16** est un organigramme illustrant une méthode pour optimiser la répartition des lots pour le promoteur immobilier

**Description du mode de réalisation préféré**

Dans la suite, l'on introduira un certain nombre de définitions (I), préalablement à un exposé d'un mode de réalisation préféré de l'invention (II).

**I . Principes généraux et définitions**

Les définitions suivantes s'appliqueront :

**Utilisateur :** correspond à la personne physique qui accède au serveur web et généralement l'acheteur ou le locataire éventuel des produits ou services commercialisés. Sinon, dans certaines occasions lorsque cela est spécifié en tant que tel, l'utilisateur peut aussi être le propriétaire ou l'utilisateur d'offre, le promoteur immobilier ou l'agent immobilier.

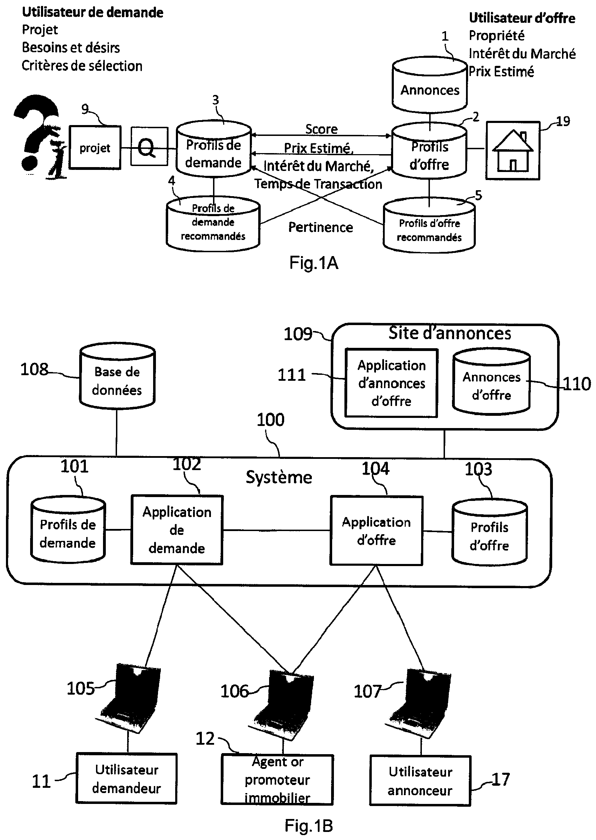

**Base de données :** comme cela est connu par un homme de métier, une base de données, comme illustrée par les blocs **108, 110, 101, 103** de la figure 1b, est une collection de données qui est organisée pour que ses contenus soient facilement accessibles, gérables et mis à jour. Dans le contexte de cette invention, deux bases de données sont fournies : la base de données de demande et la base de données d'offre.

**Base de données de demande :** la base de données de demande collecte des données applicables à un acheteur potentiel particulier, qui s'est connecté au serveur web. Une telle base de donnés collecte des données représentatives des besoins de l'utilisateur pour chaque projet.

**Base de données d'offre :** cette base de données est une collection de données applicables aux différents produits ou services commercialisés, et inclut des informations relatives au produit ou service commercialisé proprement dit, et à son propriétaire.

**Profil de demande :** c'est une collection de données - illustrées par le bloc **101** de la figure 1b - concernant un projet particulier relatif à un utilisateur. Un utilisateur peut avoir plusieurs projets, et donc des profils de demande différents.

**Profil d'offre :** c'est une collection de données - illustrées par le bloc **103** de la figure 1b - correspondant à produit ou service commercialisé.

**Variable de Critère à niveau :** une variable de critère à niveau s'appuie sur la logique floue pour définir le degré de vérité dans la satisfaction de la condition du critère. Une variable de critère à niveau est généralement évaluée avec une valeur variant entre 0 et 1 (ou de 0 à 100%). Pour un critère de demande, la valeur de la variable du critère à niveau correspond à un niveau d'importance du critère ou de la valeur d'une autre variable du critère pour le projet de l'utilisateur de demande. Elle peut être aussi évaluée par une classe qui indique le niveau d'attente : indispensable, important, peu important et interdit.

Pour un critère d'offre, la valeur de la variable du critère à niveau correspond à un niveau de réalisation du critère par le produit ou service commercialisé. Elle peut aussi être évaluée par une classe qui indique le niveau de réalisation : excellent, bon, moyen, faible ou pas applicable. Un critère d'offre subjectif qui représente une perspective personnelle a probablement une variable à niveau. Inversement, un critère d'offre objectif comme un prix, une surface ou une adresse a probablement une variable sans niveau car le critère n'a pas besoin d'être évalué avec un degré de vérité.

Les différentes bases de données **108** et les différents profils - qu'il s'agisse du profil de demande **101** ou du profil d'offre **103 -** peuvent être accédés indépendamment par l'utilisateur du site web (un acheteur potentiel) par l'intermédiaire d'un équipement de l'utilisateur de demande **105,** ou le propriétaire par l'intermédiaire d'un équipement de l'utilisateur d'offre **107** ou même un professionnel de l'immobilier par l'intermédiaire d'un équipement de l'utilisateur agent **106.**

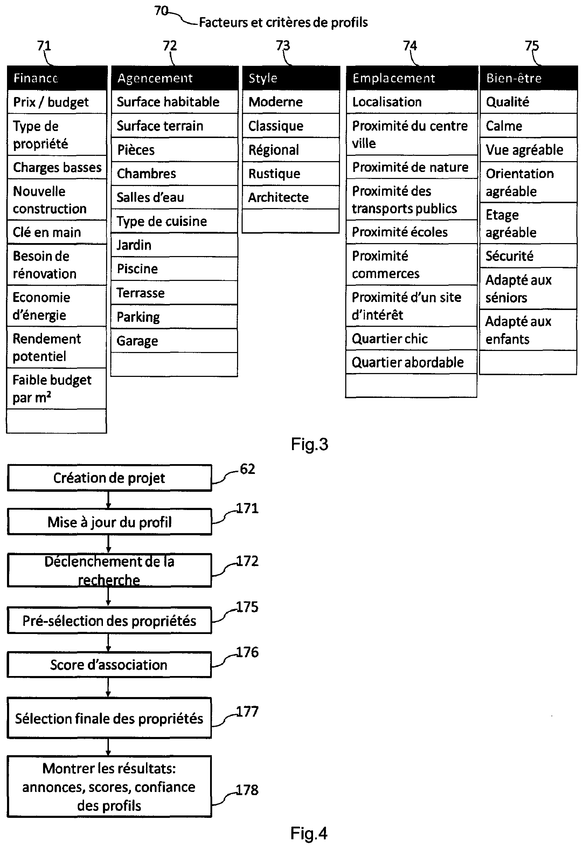

Comme il apparaitra plus particulièrement dans ce qui suit, à la fois les profils de demande et d'offre incluent un ensemble prédéfini de critères - et de préférence 43 critères comme illustré dans la figure 3 - qui correspond à certains aspects particuliers de la description de la propriété d'offre à la vente (pour un propriétaire) ou désirée par un acheteur potentiel.

Dans un mode de réalisation particulier, ces critères sont divisés dans les catégories suivantes :

finance (budget ou prix, type de propriété, faibles charges, nouvelle construction, clé en main, besoin de rénovation, économie d'énergie, rendement potentiel, faible budget par m$^2$, etc...) ;

**agencement** (surface habitable, surface du terrain, pièces, chambres, salles de bains, jardin, piscine, terrasse, parking, garage, cave, etc...) ;

**style** (moderne, classique, régional, rustique, architecte etc...),

**emplacement** (localisation, proximité du centre-ville, proximité de la nature, proximité des transports, proximité des écoles, proximité des commerces, proximité d'un site d'intérêt, quartier chic quartier abordable etc...) ;

**bien-être** (qualité, calme, vue agréable, orientation agréable, étage agréable, sécurité de l'habitation, adapté aux seniors, adapté aux enfants etc...).

**Score de transaction :** évalue le niveau d'association entre un profil d'offre et un profil de demande pour une décision de transaction.

**Score de zone :** évalue le niveau d'association entre un profil source de zone et un profil alternatif de zone pour une décision de transaction.

**Marché du site :** la quantité ou la valeur totale des produits ou des services d'une catégorie donnée vendue sur une période donnée sur le site

**Intérêt du Marché :** évalue le niveau d'intérêt de l'ensemble des utilisateurs de ce marché pour un produit ou service spécifique en vue d'une transaction.

**Prix Estimé :** estime le prix du produit ou service commercialisé basé sur les caractéristiques du produit ou service formalisées par le profil d'offre, et l'Intérêt du Marché.

**Pertinence de la demande :** estime le niveau d'association entre le profil de demande et l'ensemble des profils d'offre de la base de données pour une décision de transaction. Elle intègre un nombre limité des scores les plus élevés entre le profil de demande et les profils d'offre dans la base de données d'offre.

**Pertinence de l'offre** : estime le niveau d'association du profil d'offre et l'ensemble des profils d'offre de la base de données pour une décision de transaction. Elle combine les gains financiers qui sont attendus d'être aussi élevés que possible et l'effort de construction ou rénovation qui est attendu d'être aussi bas que possible.

L'invention sera maintenant mieux comprise avec la description du mode d'opération préféré.

## II . Description du mode d'opération préféré

La description suivante est présentée pour permettre à l'homme de métier de reproduire et d'utiliser l'invention. Les descriptions des modes de réalisations spécifiques ne sont fournies que comme exemples. Diverses modifications des modes de réalisations décrits peuvent apparaitre à un homme du métier, et les principes génériques définis ici pourraient être appliqués à d'autres modes de réalisation et applications tout en restant dans l'esprit et le cadre de la présente invention. Ainsi, l'invention présentée n'a pas l'intention d'être limitée aux modes de réalisations expressément décrites ou illustrées, mais d'être accordée au plus large cadre en rapport avec les principes et les caractéristiques divulguées ici.

La **FIG.1a** illustre les principes de base de la présente invention. Le moteur de recherche d'un site d'annonces immobilières traditionnels recherche des informations enregistrées dans une ou plusieurs bases de données d'annonces **1,** et a une connaissance très limitée au sujet des potentiels acheteurs ou utilisateurs de demande. Pour améliorer la pertinence des transactions réalisées et les recommandations susceptibles d'être proposées aux divers utilisateurs, le système comporte par ailleurs un profil d'offres **2** qui caractérise la propriété **19** de l'utilisateur d'offre, et un profil de demande **3** qui caractérise le projet **9** de l'utilisateur de demande.

Par construction, nous définissons un ensemble de critères de sélection pour un type de transaction avec des propriétés communes au profil d'offre et de demande.

Les critères du profil de demande fournissent des données d'entrée pour la recherche. Un algorithme de score évalue le niveau d'association du profil de demande **3** avec les profils d'offre **2,** et sélectionne une liste ordonnée décroissante d'annonces **1** conformément aux valeurs des scores associés.

Le système utilise l'algorithme de score entre les bases de données respectives des profils d'offre et de demande pour fournir un Intérêt du Marché qui mesure le niveau d'intérêt de l'ensemble des utilisateurs de ce marché pour un produit ou service spécifique en vue d'une transaction, et estimer le temps de transaction. Il fournit aussi une estimation de prix calculée à partir des caractéristiques de la propriété formalisées dans le profil d'offre, et l'évaluation de l'Intérêt du Marché.

L'utilisateur de demande est très intéressé de savoir s'il existe d'autres propriétés proches de ses besoins dans d'autres lieux ou avec des critères de sélection proches de son profil de demande. Il est souhaitable qu'il puisse recevoir des recommandations du système pour améliorer la pertinence de sa recherche avec des scores élevés entre le profil de demande recommandé **4** et la base de données des profils d'offre **2.**

L'utilisateur d'offre est très intéressé de savoir s'il y a d'autres utilisateurs de demandes qui recherchent une propriété avec des caractéristiques proches de celles de sa propriété immobilière qu'il envisage de mettre à la vente ou à la location. S'il décide d'augmenter la valeur de sa propriété avec la valorisation immobilière (*home staging*), quelles rénovations pourraient être les plus rentables ? Il serait donc souhaitable que ce second type d'utilisateur puisse lui-aussi recevoir des recommandations du système pour améliorer la pertinence de sa propriété avec des gains élevés, un prix élevé et un Intérêt du Marché élevé estimés à partir du profil d'offre recommandé **5** et la base de données des profils de demande **3.**

Si l'utilisateur d'offre est un promoteur immobilier, il veut connaitre les caractéristiques des lots, et la répartition des lots qui est la plus pertinente pour la demande du marché dans la localisation. Il s'attend à recevoir des recommandations du système pour optimiser ses gains estimés à partir du profil d'offre recommandé **5** et la base de données des profils de demande **3**.

La **FIG.1b** fournit l'architecture générale du meilleur mode d'un système **100** pour un moteur de recherche dans le secteur des transactions immobilières.

Comme représenté sur la figure, l'utilisateur d'offre **17** accède à une application d'offre **104** avec un équipement d'utilisateur d'offre **107**. Cela peut être un ordinateur personnel, un smartphone, une tablette ou n'importe quel dispositif informatique. L'utilisateur de demande **11** accède à une application de demande **102** avec un équipement d'utilisateur de demande **105**. L'agent immobilier ou le promoteur immobilier **12** accède à une application d'offre **104** ou de demande **102** avec un équipement utilisateur d'agent **106**.

L'application d'offre **104** gère les profils utilisateurs d'offre **103**.

L'application de demande **102** gère les profils utilisateurs de demande **101**.

Le système **100** peut accéder à des bases de données internes ou externes **108** pour accéder à des informations publiques comme la carte des localisations ou le prix moyen au m$^2$ dans le quartier.

Il accède aussi aux annonces enregistrées dans la base de données des annonces **110** et hébergées dans des sites d'annonces **109** et des applications **111**. Le système peut aussi être intégré dans une application d'offres d'annonces **111** avec des Interfaces de Programme d'Application (API).

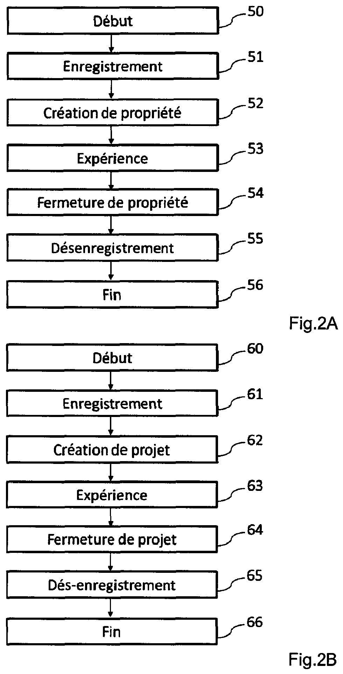

Comme le montre la **FIG.2a,** l'utilisateur d'offre **17** suit les étapes suivantes lorsqu'il utilise le système :

Démarrer à l'étape **50,** correspondant à la connexion de l'utilisateur au système.

L'utilisateur s'enregistre optionnellement, à l'étape **51,** au système pour obtenir une identité d'abonné et une preuve d'identité, et enregistre une ou plusieurs adresses telles que l'adresse email de l'utilisateur ou l'adresse email d'un agent pour recevoir des alertes. Cette étape est optionnelle parce que le système reçoit aussi des annonces **110** d'utilisateurs qui ne s'enregistrent pas au système.

Puis le système procède à la création d'un enregistrement pour une propriété, à l'étape **52,** pour enregistrer une identité de la propriété. L'utilisateur peut créer plusieurs propriétés. Le système crée des pseudos propriétés pour des utilisateurs qui ne sont pas enregistrés. Le système assigne une identification de propriété par défaut pour simplifier le processus d'enregistrement. L'abonné crée une identité de propriété par propriété qu'il veut publier. Le système crée un profil par propriété. L'utilisateur d'offre a une option dans son interface utilisateur pour sélectionner la propriété de son choix avant de passer à l'étape suivante.

L'utilisateur d'offre expérimente le système dans l'étape **53.**

Lorsque l'utilisateur veut arrêter de publier son profil, il clôture l'enregistrement relatif à la propriété, à l'étape **54.** Si une transaction est réalisée avec le projet d'un utilisateur de demande, le système enregistre les profils des abonnés pour ajuster dynamiquement les paramètres des algorithmes du système.

L'utilisateur d'offre se désabonne du système à l'étape **55,** s'il s'était abonné à l'étape **51.**

Le procédé mis en oeuvre par l'utilisateur d'offre s'achève ensuite avec une étape **56.**

Comme le montre la **FIG.2b,** l'utilisateur de demande **11** met en oeuvre un procédé dont les étapes sont les suivantes :

Le procédé démarre avec une étape **60** correspondant à la connexion de l'utilisateur au système.

L'utilisateur s'enregistre optionnellement, à l'étape **61,** au système pour obtenir une identité d'abonné et une preuve d'identité, et enregistre une ou plusieurs adresses telles que l'adresse email de l'utilisateur ou l'adresse email d'un agent pour recevoir des alertes.

Si l'utilisateur ne veut pas s'abonner au système, le système identifie l'utilisateur de demande avec une information enregistrée dans l'équipement de l'utilisateur **105** tel qu'un cookie, et fournit un sous ensemble des services aux abonnés. Le système n'envoie pas d'alertes aux utilisateurs qui ne sont pas abonnés.

L'étape suivante est de créer un projet, à l'étape **62,** pour enregistrer une identité de projet. Le système peut assigner une identité de projet par défaut pour simplifier le processus d'enregistrement. L'abonné crée une identité de projet par projet immobilier qu'il recherche. Le système crée un profil par projet. L'utilisateur de demande a une option dans son interface utilisateur pour sélectionner le projet de son choix avant de passer à l'étape suivante.

Si l'utilisateur de demande ne s'est pas enregistré dans le système ou s'il n'a pas de projet de transaction (il sélectionne une identité de projet « pas de projet »), le système crée un pseudo projet avec un pseudo profil de demande pour sélectionner et prioriser des propriétés, mais il ne montre pas les scores des associations de profils.

Le procédé se poursuit ensuite avec une étape **63,** au cours de laquelle l'utilisateur de demande peut, lors de la navigation dans le site web, rechercher des propriétés, sélectionner des propriétés, faire une offre d'achat, et obtenir un score pour chaque propriété sélectionnée par l'algorithme de recherche. Il reçoit des alertes qui référencent les nouvelles propriétés dont le score est supérieur à un niveau spécifié par l'utilisateur.

Lorsque l'utilisateur veut s'arrêter de rechercher une propriété, il clôture l'enregistrement relatif à la propriété à l'étape **64.** Si une transaction est réalisée avec la propriété d'un utilisateur d'offre, le système enregistre les profils des abonnés pour ajuster dynamiquement les paramètres des algorithmes du système.

L'utilisateur de demande se désabonne à l'étape **65,** s'il s'était abonné à l'étape **61.**

Le procédé mis en oeuvre par l'utilisateur de demande s'achève avec une étape **66**de demande.

Les critères de sélection sont spécifiés pour plusieurs raisons :

- Pour établir un score d'association entre une propriété proposée, qui correspond à un profil d'offre, et un projet de de demande qui correspond à un profil de demande.
- Pour estimer le prix de la propriété, qui correspond à un profil d'offre.

Les critères d'offre et de demande sont des objets différents liés par des propriétés communes.

Les critères de sélection contiennent un ensemble de critères objectifs et subjectifs. La plupart des sites d'annonces immobilières utilisent des critères objectifs tels que le prix, la surface habitable, le nombre de chambres et la localisation pour la recherche immobilière. Cela simplifie le moteur de recherche parce que la valeur du critère objectif reste inchangée pour tous les utilisateurs. Par contre cette approche ne donne pas les informations indispensables à une prise de décision d'achat ou de location. C'est la raison pour laquelle le système utilise aussi des critères subjectifs qui représentent une perspective personnelle de l'utilisateur, une croyance, un désir ou un souhait. Les critères subjectifs tels qu'une vue agréable, une orientation agréable, la sécurité de la maison ou la proximité du centre-ville jouent un rôle très important dans une décision de transaction et sont intégrés dans les critères de sélection.

Les critères de sélection contiennent un ensemble de variables de critères à niveau et sans niveau.

Une valeur à niveau est comprise entre 0 et 1. Pour l'offre, une variable de critère est à niveau pour mesurer le niveau de réalisation du critère. Pour la demande, une variable de critère est à niveau pour mesurer le niveau d'attente pour le critère. Les critères d'offre subjectifs ont des variables à niveau.

Une variable de critère qui n'est pas à niveau est sans niveau. Elle peut avoir n'importe quel type de donnée tel que numérique, date, chaine de caractères (i.e. le nombre de pièces a un type numérique, une adresse a un type texte).

Comme le montre la **FIG.3,** le profil d'offre **103** et le profil de demande **101** contiennent un nombre de critères et de facteurs de décision **70.**

La plupart des sites d'annonces immobilières définissent des facteurs de finance **71** et d'agencement **72** avec quelques critères objectifs car ce sont les plus faciles à évaluer en logique Booléenne. Le mode de réalisation préféré définit les 5 grands facteurs de décision : la finance **71,** l'agencement **72,** le style **73,** l'emplacement **74,** et le bien-être **75** pour couvrir la gamme complète de facteurs psychosociologiques pour une décision immobilière.

Le facteur financier se rapporte aux critères qui impactent la finance du projet : le budget ou le prix, le type de propriété (i.e. appartement, terrain, péniche, maison individuelle, maison jumelée, ou propriété inconnue), faibles charges, nouvelle construction, clé en main, besoin de rénovation, économie d'énergie, rendement potentiel, faible budget par m². Les critères sont définis pour permettre de définir une évaluation ou un niveau de classification pour les attentes du projet de demande lorsque c'est possible. Par exemple, un utilisateur de demande peut facilement classer ses attentes pour le critère « nouvelle construction » entre les classes suivantes : indispensable, important, peu important et interdit. Il serait beaucoup plus complexe pour un utilisateur de demande de renseigner un critère « année de construction ». Par contre il est plus facile pour un utilisateur d'offre de renseigner l'année de construction. C'est la raison pour laquelle le système demande à l'utilisateur d'offre de renseigner l'année de construction de la propriété dans le profil d'offre et convertit le paramètre année de construction en un niveau de réalisation du critère « nouvelle construction ». De même, l'utilisateur d'offre renseigne le paramètre « charges annuelles » qui est converti par le système en critère à niveau « charges basses ».

Le facteur d'agencement **72** se rapporte à l'agencement de la propriété : surface habitable, surface du terrain, pièces, chambres, salles de bains, jardin, piscine, terrasse, parking, garage, et cave.

Le facteur de style **73** se rapporte au style de la propriété : moderne, classique, régional, rustique, et architecte. Ils peuvent être étendus ou adaptés pour adresser des lieux géographiques spécifiques.

Le facteur d'emplacement **74** se rapporte à l'emplacement de la propriété : localisation, proximité du centre-ville, proximité de la nature, proximité des transports, proximité des écoles, proximité des commerces, proximité d'un site d'intérêt, quartier chic et quartier abordable. La localisation de l'offre est l'adresse de la propriété. La localisation de la demande est une adresse ou le nom d'une zone géographique, et une distance à partir de cette zone. Les valeurs de critères à niveau commençant par « proximité » estiment le niveau de réalisation de l'offre, et le niveau d'intérêt de la demande de proximité pour le type d'emplacement. Un quartier chic est plus cher. Un quartier abordable est meilleur marché.

Le facteur de bien-être **75** se rapporte au bien-être pour habiter dans la propriété : qualité (de la construction), calme, vue agréable, orientation agréable, étage agréable, sécurité de l'habitation, adapté aux seniors, et adapté aux enfants.

Les facteurs et critères de profil **70** sont adaptés pour adresser des segments de marché spécifiques. Un segment de marché associe une zone géographique, un type de propriété, et un mode de transaction.

Voici des exemples de modes de transaction :

- Vendre / acheter
- Location vide
- Location meublée
- Viager
- Vente aux enchères

Une propriété **19** peut correspondre à plusieurs types de propriété. L'utilisateur d'offre attribut un ou plusieurs types de propriétés. Par exemple, un appartement peut être vendu à un utilisateur de demande qui cherche une copropriété. L'utilisateur sélectionne un type de propriété par défaut. Le système définit une tactique d'association pour évaluer le score d'association d'un critère pour un type de propriété demandé avec le critère d'un autre type de propriété d'offre.

Comme le montre la **FIG.4**, les étapes de recherche sont les suivantes : L'utilisateur de demande du système crée un projet, à une étape **62** pour rechercher une propriété. Si l'utilisateur ne s'est pas enregistré sur le site, ou si l'utilisateur a sélectionné « pas de projet », le système crée au moins un pseudo projet. L'utilisateur de demande initialise ou met à jour éventuellement son profil, dans une étape **171,** avec des nouvelles valeurs de critères et déclenche une étape de recherche, lors d'une étape **172,** à partir de son interface utilisateur.

Le système réalise une pré-sélection de propriétés, dans une étape **175** avec la logique Booléenne pour sélectionner les propriétés qui sont conformes aux valeurs de critères sans niveau (i.e. localisation, budget) et avec des valeurs étendues d'intervalles pour présélectionner un nombre de propriétés. Par exemple, cette étape sélectionne les propriétés ayant un budget dans l'intervalle du budget du projet de demande ± 20%.

Le système élimine aussi les propriétés qui remplissent un critère qui est interdit par le de demande.

Dans une étape **176,** le système calcule un score pour chaque propriété présélectionnée.

Le système utilise la logique floue pour évaluer le score d'association offre - demande. La logique floue traite du raisonnement qui est approximatif plutôt que fixe ou exact. Les variables de la logique floue peuvent avoir une valeur de vérité comprises entre 0 et 1. Elle convient particulièrement bien à un moteur de recherche pour évaluer le score d'associations offre - demande avec un grand nombre de critères de décision, incluant des critères subjectifs.

Il effectue une sélection finale des propriétés, dans une étape **177,** avec un nombre minimum de propriétés ou avec les propriétés qui excèdent un niveau spécifique de score.

Puis, dans une étape **178,** le système produit en sortie les résultats de la recherche : la liste ordonnée décroissante des propriétés, et le score de chaque propriété.

L'opération de score de transaction pour l'association d'un critère d'offre avec un critère de demande mesure l'impact du niveau de satisfaction de l'attente de la demande pour le critère de demande avec le niveau de réalisation du critère d'offre pour une décision de transaction. Sa valeur est comprise entre 0 et 1.

Le score de transaction pour l'association offre - demande évalue le niveau d'association entre la propriété spécifique d'offre et le projet spécifique de demande. Il utilise un nombre non prédictible de critères dans le profil d'offre et de demande. Seuls les scores d'association de critères avec des valeurs de critères de demande connus sont considérés.

Le score pour l'association offre - demande est la moyenne pondérée de la somme des scores de critères. Sa valeur est comprise entre 0 et 1.

Le système offre des services additionnels à l'utilisateur d'offre pour estimer l'Intérêt du Marché pour sa propriété. L'objectif de l'évaluation de l'Intérêt de Marché est de mettre à profit la base de données des profils de demande et d'offre pour fournir des alertes et un niveau d'Intérêt du Marché à l'utilisateur d'offre lorsqu'il le souhaite, spécialement lorsqu'il publie son profil, et lorsqu'il veut ajuster son prix. Il n'a pas besoin d'attendre que de nouveaux utilisateurs de demandes recherchent sa propriété et le contactent.

Le système effectue une recherche inversée à partir du profil d'offre vers la base de données de demande. Il parcourt l'ensemble de la base de données des profils de demande **101** pour sélectionner une liste ordonnée décroissante de projets de de demandes, conformément aux valeurs des scores associés. Cette information peut être fournie à un agent, ou à l'utilisateur d'offre. L'utilisateur de demande n'a pas besoin de rechercher la propriété pour être averti.

L'Intérêt du Marché évalue le niveau d'intérêt de l'ensemble des utilisateurs de ce marché pour un produit ou service spécifique en vue d'une transaction. Sa valeur est comprise entre 0 et 1.

Pour une propriété d'offre s, s'il y a au moins 1 projet de demande qui correspond en dépassant un seuil de score, et accessible pendant une période de temps, le système calcule :

- Le Nombre de Projets de Demande qui correspondent NDP(s) $\in [1, \infty[$.
- Le nombre de propriétés d'offre similaires incluant la propriété NSS(s) $\in [1, \infty[$. Les propriétés similaires sont l'ensemble des propriétés qui correspondent à l'ensemble des projets de demande qui correspondent à la propriété

**11**

d'offre de référence.

- L'Indicateur de Position PI(s) $\in$ ]0, 1] indique le niveau de position de la propriété d'offre de référence pour des recherches à partir des projets de demande correspondant à la propriété d'offre de référence.

- Le Ratio Prix Estimé / Publié EPPR(s) $\in$ ]0, $\infty$[. $\text{EPPR(s)} = \dfrac{Prix\ Estim\acute{e}(s)}{Prix\ Publi\acute{e}(s)}$.

L'opération Intérêt du Marché MI(s) est une fonction de ces 4 variables : Demande NDP(s), Offre NSS(s), Indicateur de Position PI(s), et Ratio Prix Estimé / Publié EPPR(s) :

$$\text{MI(s)= Fonction }\left(\frac{NDP(s) * PI(s) * EPPR(s)}{NSS(s)}\right)$$

L'Intérêt du Marché est haut si la demande est plus forte que l'offre. Par conséquent l'expression calcule le ratio demande / offre.

Si l'Indicateur de Position est bas, la propriété d'offre de référence n'est pas dans une bonne position, par rapport aux autres propriétés d'offre, pour atteindre une transaction, et l'Intérêt du Marché diminue. Si l'Indicateur de Position est proche de 1, il a un impact minimum sur l'Indicateur de Marché.

Si l'utilisateur d'offre publie un prix plus haut que le Prix Estimé, l'EPPR est plus petit que 1 et l'Intérêt du Marché diminue. Si l'utilisateur d'offre publie un prix plus bas que le Prix Estimé, l'EPPR est plus grand que 1 et l'Intérêt du Marché augmente.

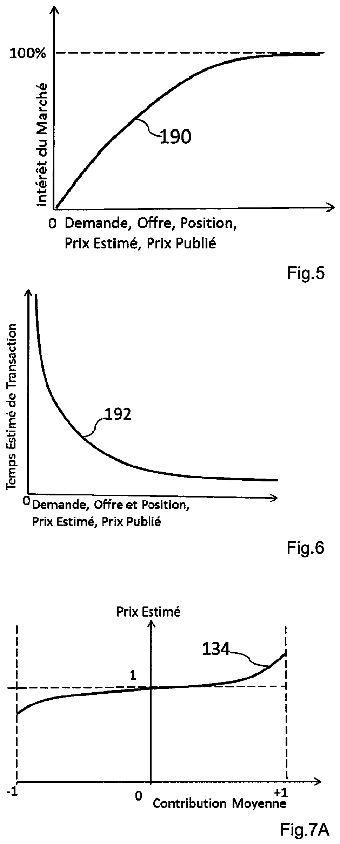

Comme le montre la **FIG.5,** l'opération d'Intérêt du Marché est une fonction **190** de la Demande NDP(s), l'Offre NSS(s), l'Indicateur de Position PI(s), et le Ratio Prix Estimé / Publié EPPR(s). Elle commence à 0 pour un petit ratio parce qu'il n'y a pas de demande, ou la demande est beaucoup plus basse que l'offre et l'offre n'est pas dans une bonne position par rapport aux autres offres. Puis elle augmente linéairement pour un ratio plus important et suit une augmentation asymptotique à proximité de 100% pour un ratio très important.

Pour améliorer l'ergonomie, le système affiche une vue simplifiée de l'Intérêt du Marché avec 3 classes :

- Excellent : MI $\in$ [60% - 100%]. L'offre est dans une position excellente par rapport au marché.
- Neutre : MI $\in$ [30% - 60%[. L'offre est dans une position neutre par rapport au marché.
- Faible : MI $\in$ [0% - 30%[. L'offre est dans une position faible par rapport au marché.

Le système estime le temps de transaction qui est le temps entre la date de publication du profil et la date de signature de la transaction.

L'opération de Temps de Transaction Estimé ETT(s) est fonction des 4 variables utilisées pour évaluer l'Intérêt du Marché : la Demande NDP(s), l'Offre NSS(s), l'Indicateur de Position PI(s), et le Ratio Prix Estimé / Publié EPPR(s) :

$$\text{ETT(s)= Fonction }\left(\frac{NDP(s) * PI(s) * EPPR(s)}{NSS(s)}\right)$$

Comme le montre la FIG.6, l'opération de Temps de Transaction Estimé est une fonction **192** de la Demande NDP(s), l'Offre NSS(s), l'Indicateur de Position PI(s), et le Ratio Prix Estimé / Publié EPPR(s). Elle commence par une asymptote à l'infini (temps indéfini) pour un faible ratio parce que la demande est faible par rapport à l'offre pour cette offre. Puis elle diminue pour un ratio plus grand et suit une diminution asymptotique vers un temps faible pour un ratio très élevé.

L'estimation du prix du marché pour la propriété est une information très importante pour l'utilisateur d'offre. L'utilisateur qui propose un prix trop bas peut perdre beaucoup d'argent. L'utilisateur qui propose un prix trop haut ne trouve pas d'acheteurs et peut perdre beaucoup de temps.

Certains sites d'annonces immobilières estiment le prix d'une propriété à partir d'une recherche dans une base de données externe **108** qui fournit un prix moyen au m$^2$ dans le quartier. Cependant, le prix de la propriété est aussi influencé par les valeurs de chaque critère du profil, et par le rapport de force entre l'offre et la demande pour cette propriété. C'est la raison pour laquelle le système met à profit les valeurs des critères de profil, et l'Intérêt du Marché pour évaluer le prix de la propriété pour un mode de transaction.

L'estimation de prix s'avère d'autant plus précise qu'un grand nombre de critères et paramètres sont renseignés. Cela motive l'utilisateur d'offre à renseigner autant de critères et paramètres que possible, aussitôt que possible. Puisque les mêmes critères sont utilisés pour le score, cela contribue à augmenter la précision du score. L'estimation de prix est un service à valeur ajouté fourni par le système pour conseiller l'utilisateur d'offre. Néanmoins, c'est la responsabilité de l'utilisateur d'offre de décider du prix qu'il veut publier.

Le système assigne une valeur de prix pour l'offre s à chaque critère i de sélection PVC(s,i), et définit une opération pour convertir la valeur moyenne du critère AVC(s,i), vers une valeur de prix pour le même critère PVC(s,i) comme suit :

1) Si le critère n'a pas d'impact sur le prix, PVC(s,i)=0

2) Si l'impact sur le prix de la valeur du critère à niveau ou Booléen est toujours positif pour toute valeur de critère, PVC(s,i)=AVC(s,i) $\in$ [0,+1].

3) Si l'impact sur le prix de la valeur du critère à niveau est toujours négatif pour toute valeur de critère, PVC(s,i)=-AVC(s,i) $\in$ [-1, 0].

4) Si l'impact sur le prix de la valeur du critère à niveau est négatif lorsque la valeur de critère est faible, et positif lorsque la valeur est haute, PVC(s,i)=2AVC(s,i)-1 $\in$ [-1, +1].

La contribution moyenne des critères sur le prix ACP(s) est la moyenne pondérée des sommes des valeurs de tous les critères de prix PVC(s,i).

Le Prix Estimé pour la propriété s EP(s) est une fonction du prix au m$^2$ dans le quartier, de la surface habitable, du coût de rénovation, du taux de négociation, de la contribution moyenne des critères, et de l'Intérêt du Marché : EP(s)=(Prix_au_m2_dans_le_Quartier*Surface_Habitable*(1+Taux_de_Negociation )*Fonction(ACP(s))*Fonction(MI(s))-Cout_de_Renovation.

Le prix au m$^2$ dans le quartier est le prix officiel publié dans des bases de données externes **108** pour le mode de transaction.

Le taux de négociation est la déviation moyenne entre les prix publiés par les utilisateurs annonceurs et les prix convenus lors des transactions. Le système tient à jour les taux de négociation quand une transaction est signée et enregistre l'historique des taux de négociation. Il applique le taux moyen de négociation actualisé pour le segment de marché et pour la gamme de prix.

Comme le montre la **FIG.7a,** l'opération d'estimation de prix est une fonction **134** de la contribution moyenne des critères.

Cette fonction commence pour x=-1 à une valeur inférieure à 1 parce qu'elle diminue le prix estimé si uniquement les critères à impact négatif sont renseignés à 100%. Puis elle augmente rapidement pour atteindre la valeur de 1 pour x=0. A ce point, cette fonction ne change pas le prix estimé. Puis elle augmente davantage pour x approchant +1 parce qu'elle augmente le prix estimé des propriétés fantastiques ayant des valeurs très hautes pour les critères à impact positif.

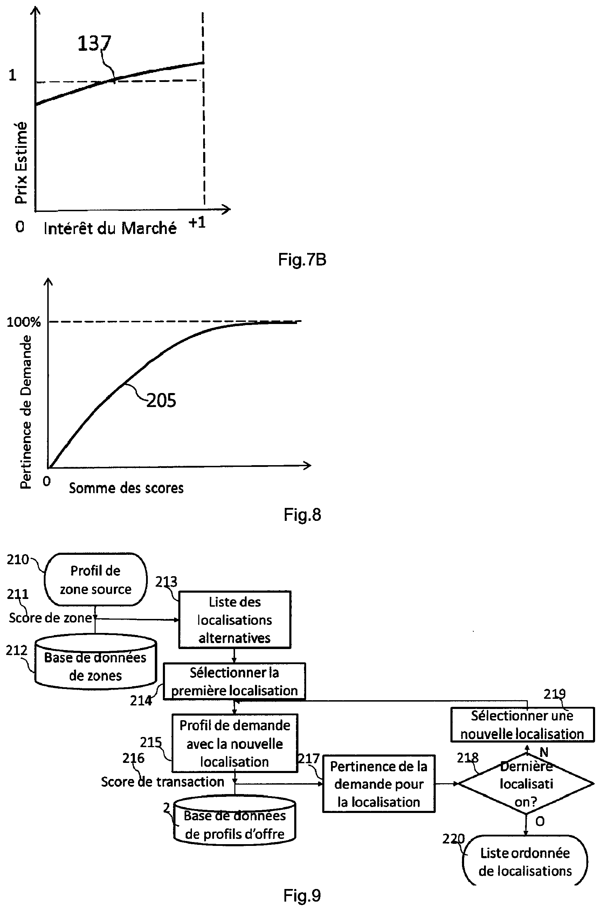

Comme le montre la **FIG.7b,** le prix estimé est aussi fonction **137** de l'Intérêt du Marché. Cette fonction commence pour x=0 avec une valeur inférieure à 1 parce qu'un l'Intérêt du Marché bas a un impact négatif sur le prix estimé. Puis elle augmente pour atteindre une valeur de 1 pour une valeur d'Intérêt du Marché moyen. A ce point, cette fonction ne change pas l'estimation du prix. Puis elle continue d'augmenter pour x approchant +1 avec une valeur supérieure à 1 parce qu'un l'Intérêt du Marché élevé a un impact positif sur l'estimation du prix.

Il est à noter que l'estimation de l'Intérêt du Marché' demande un nombre minimum de profils d'offre et de demande dans la localisation pour le segment de marché. Si ce n'est pas le cas, l'Intérêt du Marché n'est pas utilisé pour l'estimation de prix.

Les recommandations s'appliquent pour l'utilisateur de demande, l'utilisateur d'offre, et le promoteur immobilier.

L'objectif des recommandations pour l'utilisateur de demande est de recommander des modifications de profil de demande qui maximisent la pertinence de valeurs de variables des critères de sélection par rapport au marché. Elle améliore l'efficacité de la recherche.

L'utilisateur de demande sélectionne une localisation pour initialiser une recherche. Mais il peut ne pas savoir qu'il y a beaucoup d'habitations qui correspondent à ses besoins dans une ville proche ayant des caractéristiques similaires. Ou qu'il y a des habitations qui correspondent à ses besoins avec un budget légèrement plus haut ou plus bas.

Le système utilise une méthode Heuristique basée sur l'algorithme de score et sur les caractéristiques des propriétés enregistrées dans la base de données des profils d'offre.

Le profil de demande recommandé **4** modifie trois types de critères : la localisation, la distance, ou d'autres critères.

Les recommandations de modification de la localisation nécessitent de caractériser chaque zone d'intérêt.

Le segment de marché du projet détermine le type de zone qui correspond à un profil de zone contenant une liste de critères de profil de zone, une portée de zone, et une distance maximale entre la localisation source et la localisation alternative. Une valeur par défaut est définie pour la distance maximale associée à chaque type de zone. L'utilisateur de demande a l'option de modifier cette valeur.

Le segment de marché des magasins a des critères de profil de zone spécifiques associés à la portée de la rue ou du quartier : facilité d'accès, facilité à se garer, niveau d'activité commerciale pour un type de commerce...

Le segment de marché des habitations a d'autres critères de profil de zone associés à la portée de la ville ou du quartier : prix au $m^2$, taille de la ville la plus proche, densité de population, activités culturelles, activités sportives, quartier chic, proximité du centre-ville, proximité de la nature, proximité des transports, proximité des écoles, proximité des commerces, proximité d'un site d'intérêt...

Les profils de zones peuvent être renseignés par des analyses de données ouvertes, des enquêtes auprès des utilisateurs, ou les administrateurs du système.

L'opération de score de zone pour l'association d'un critère de profil de zone source - alternative utilise la logique floue. Elle mesure le niveau de proximité de valeur du critère entre la localisation source et alternative pour une décision de transaction.

Le score de zone pour l'association de profil de zone source - alternative évalue le niveau d'association entre le profil zone source et le profil de zone alternative pour une décision de transaction.

Le score pour l'association de profil de zone source - alternative est la moyenne pondérée de la somme des critères de score associés au profil de score. Sa valeur est comprise entre 0 et 1.

La pertinence de la demande estime le niveau de pertinence du profil de demande pour une décision de transaction à partir de la connaissance des caractéristiques des propriétés d'offre et des projets de demande. Elle intègre un nombre limité des scores les plus élevés entre le profil de demande et les profils d'offre dans la base de données d'offres.

Soit d, un profil de demande.

Le système sélectionne les n profils d'offre s(i) correspondant au profile de demande d, avec les scores les plus élevés.

n <= Nombre Maximum de profils d'offre MNS.

La Pertinence de la Demande $DR(d)=\text{fonction}(\sum_{i=1}^{n} score(d,s(i))^{a})$ Pour augmenter le poids des scores les plus élevés, le facteur de puissance a est inférieur à 1. Grace à ce facteur a, un score de 80% a plus de poids que deux scores de 40%.

$DR(d) \in [0,1]$.

Comme le montre la **FIG.8,** la Pertinence de Demande DR(d) est convertie dans l'intervalle [0, 1] avec la fonction **205.**

Elle commence à 0 pour une valeur petite de somme de scores parce qu'il n'y a pas de correspondance. Puis elle augmente linéairement pour une valeur de somme de scores plus grande et poursuit une augmentation asymptotique proche de 100% pour une très grande valeur de somme de scores.

Comme le montre la **FIG.9,** une méthode pour initialiser les modifications de la localisation dans le profil de demande suit les étapes suivantes : le système commence par la création d'un profil de zone source **210** pour le projet de demande associé au type de zone du segment de marché, et une distance maximale entre la localisation source et la localisation alternative.

L'algorithme de score de zone **211** calcule les scores entre la zone source et les zones alternatives, enregistrées dans la base de données de zone **212,** et situées à une distance inférieure à la distance maximale de la localisation source. Il fournit une liste ordonnée décroissante de localisations alternatives **213,** conformément aux valeurs de score de zone des localisations alternatives associées.

Le système sélectionne la localisation alternative ayant le plus haut score de zone **214** et exécute l'algorithme de score de transaction **216** entre le profil de demande avec la nouvelle localisation **215** et la base de données de profil d'offre **2.** Il génère une liste ordonnée décroissante d'annonces conformément aux valeurs de score de transaction associées, qui est convertie en une valeur de pertinence de la demande pour la localisation **217.**

Le système teste si la dernière localisation est atteinte **218.** Si elle n'est pas atteinte, il sélectionne une nouvelle localisation **219,** et continue à estimer la pertinence de la prochaine localisation **215.** Si elle est atteinte, il enregistre une liste ordonnée décroissante de localisations recommandées **220,** conformément aux valeurs de pertinence de chaque localisation alternative associée.

Le système recommande les modifications d'un deuxième type de critère de profil de demande : la distance. C'est un processus plus simple que les modifications de la localisation mais il est limité à une petite distance de la localisation source. C'est une option alternative aux recommandations de modification de localisation.

La recommandation de modification de la distance augmente la distance D à partir de l'adresse de la source spécifiée par l'utilisateur de demande et cherche les propriétés avec les scores les plus élevés.

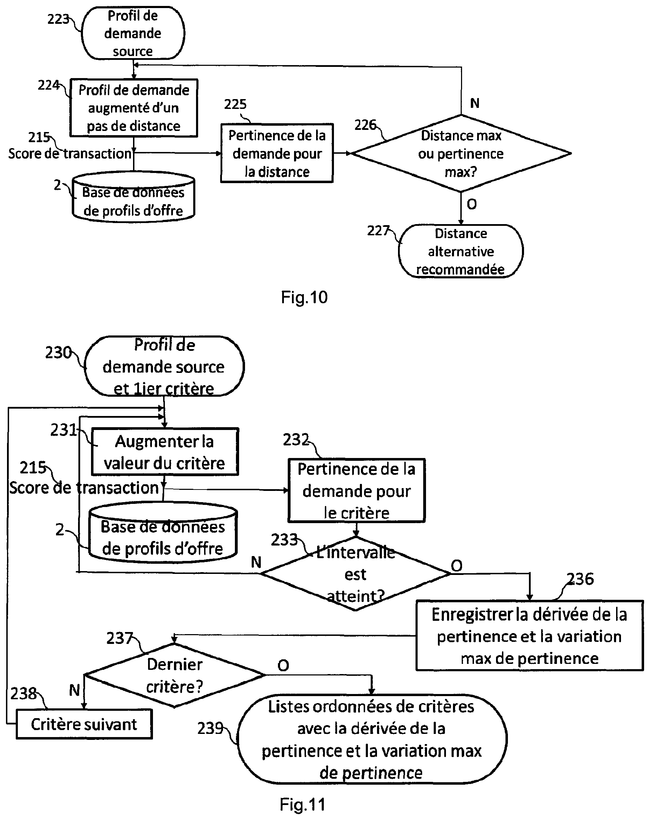

Comme le montre la **FIG.10,** une méthode d'initialisation des modifications de la distance dans le profil de demande suit les étapes suivantes : le système commence avec le profil de demande source **223.** Il augmente la distance à partir de l'adresse source, dans le profil de demande recommandé, avec un pas prédéfinit **224.**

Il exécute le score de transaction **215** entre le nouveau profil de demande recommandé **224** et la base de données des profils d'offre 2. Il génère une liste ordonnée décroissante d'annonces, conformément aux valeurs de score de transaction associées, qui est convertie en une Pertinence de la Demande pour la valeur de la distance **225.**

Le système teste si la distance maximale prédéfinie MD ou la valeur maximale prédéfinie de pertinence est atteinte **226.**

Si elle n'est pas atteinte, il revient à l'étape **224,** augmente la distance d'un pas et continue à estimer la pertinence pour la nouvelle distance. Si elle est atteinte, il enregistre la valeur de la Distance Alternative recommandée AD **219.**

Le système recommande des modifications pour un troisième type de critère de profil de demande : d'autres critères.

Les recommandations de modification des valeurs des autres critères évaluent la variation de pertinence de la demande lorsque la valeur des autres critères augmente ou diminue, et recherche les valeurs des autres critères qui engendrent la plus grande pertinence.

La dérivée de pertinence mesure la pente de la variation de pertinence pour une petite variation de valeur de critère. Plus la dérivée de pertinence est élevée, plus l'impact d'une petite modification de la valeur du critère est élevé.

La variation maximale de la valeur du critère est la variation dans un intervalle prédéfini autour de la valeur source du critère qui fournit la variation maximale positive de pertinence.

Comme le montre la **FIG.11,** une méthode d'initialisation des modifications des valeurs des autres critères suit les étapes suivantes : le système commence avec le profil de demande source et un premier critère **230.** Il associe à chaque critère un intervalle de valeurs autour de la valeur source, un pas d'évaluation, et initialise la valeur la plus basse de l'intervalle.

Il augmente la valeur du critère avec le pas défini à l'étape **231.**

Il exécute le score de transaction **215** entre le nouveau profil de demande recommandé et la base de données de profils d'offre **2.** Il génère une liste ordonnée décroissante d'annonces, conformément aux valeurs de score de transaction associées, qui est convertie en une pertinence de la demande pour la valeur des critères **232.**

Le système teste si l'intervalle est atteint **233.** S'il n'est pas atteint, il revient à l'étape **231** pour continuer d'augmenter d'un pas la valeur du critère. S'il est atteint, il enregistre la valeur de la dérivée de pertinence à la valeur source du critère, la valeur du critère qui fournit la pertinence maximale dans l'intervalle, et la variation maximale de pertinence entre la valeur source du critère et la valeur qui fournit la pertinence maximale dans l'intervalle **236.**

Le système teste si le dernier critère a été atteint **237.**

S'il n'a pas atteint tous les critères, il sélectionne le critère suivant **238,** et revient à l'étape **231.**

S'il a atteint tous les critères, il enregistre une liste ordonnée décroissante de critères conformément aux valeurs de dérivée de pertinence maximale associées, et une liste ordonnée décroissante de critères conformément aux valeurs de variation de pertinence maximale associées **239.**

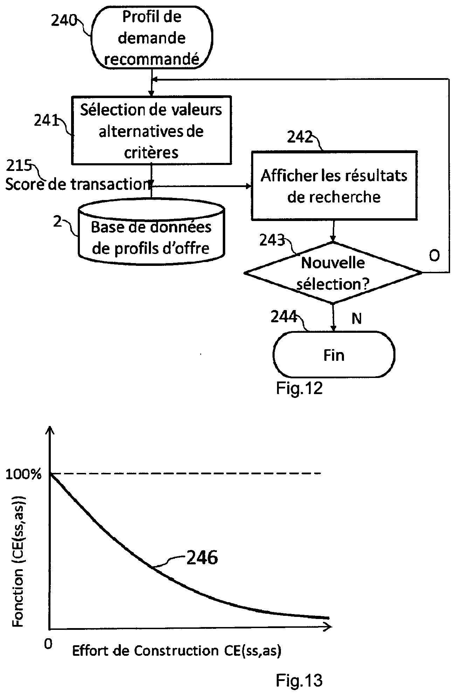

Comme le montre la **FIG.12,** une méthode pour finaliser les recommandations de demande suit les étapes suivantes : le système commence à afficher le profil de demande recommandé à l'utilisateur de demande **240.** Il peut contenir la liste ordonnée décroissante des valeurs alternatives recommandée de critères, les localisations recommandées, ou la distance alternative recommandée, la dérivée maximale de pertinence de valeurs de variables des critères, la variation de pertinence maximale des critères, et la valeur des critères associés.

L'utilisateur de demande sélectionne les critères qu'il veut changer et les valeurs de ces critères **241.**

Le système exécute le score de transaction **215** entre le nouveau profil de demande recommandé **241** et la base de données de profils d'offre **2.** Il génère une liste ordonnée décroissante d'annonces conformément aux valeurs de score de transaction associées **242.**

L'utilisateur de demande a le choix de continuer la sélection **243** de valeurs alternatives de critères et de revenir à l'étape **241,** ou d'arrêter la sélection et de terminer **244** le processus de recommandation de demande.

Les recommandations de la demande améliorent l'efficacité de la recherche. Elles ne nécessitent pas des interactions avec l'utilisateur de demande pour chaque valeur de critère. Le système peut modifier les valeurs de critères les plus pertinentes, et avertir l'utilisateur de demande qu'il a adapté son profil à l'offre de marché si certaines conditions sont remplies : par exemple, le nombre de résultats de recherches est faible ou le score de transaction maximal est bas. C'est une méthode simple de booster le score.

Les recommandations s'appliquent aussi à l'utilisateur d'offre.

Si la propriété est déjà construite, l'utilisateur d'offre est très intéressé par des recommandations pour optimiser la valorisation immobilière.

L'objectif des recommandations pour l'utilisateur d'offre avec une propriété déjà construite est de recommander des rénovations qui correspondent à des modifications de profil d'offre qui maximisent la pertinence des rénovations par rapport au marché, et les gains pour l'utilisateur d'offre.

Le système utilise une méthode heuristique basée sur les algorithmes d'Estimation de Prix, le Temps de Transaction, les coûts et temps de rénovation, les caractéristiques des projets enregistrés dans la base de données de profils de demande, et des propriétés enregistrées dans la base de données de profils d'offre.

La variation de pertinence de l'offre estime le niveau de pertinence pour aller d'un profil d'offre source vers un profil d'offre alternatif pour une décision de transaction à partir de la connaissance des caractéristiques des propriétés d'offre et des projets de demande. Elle combine les Gains Financiers qui sont attendus aussi hauts que possible et l'effort de construction ou rénovation qui est attendu aussi bas que possible.

Soit ss un profil d'offre source et as un profil d'offre alternatif.

Le Prix Estimé EP(as) $\in$ [0, $\infty$[ expliqué plus haut.

Le Temps Estimé de Transaction ETT(as) $\in$ [0, $\infty$[ expliqué plus haut.

Le Coût de Construction CC(ss,as) $\in$ [0, $\infty$[ est le coût de construction ou rénovation pour aller d'un profil d'offre source vers un profil d'offre alternatif.

Le Temps de Construction CT(ss,as) $\in$ [0, $\infty$[ est le temps de construction ou rénovation pour aller d'un profil d'offre source vers un profil d'offre alternatif.

Le Rendement de la Propriété PY(as) $\in$ [0, $\infty$[ est le rendement potentiel de la propriété d'offre avec le profil alternatif.

Les Gains Financiers FE(ss,as) $\in$ ]-$\infty$, $\infty$[ sont les gains financiers pour aller d'un profil d'offre source vers un profil d'offre alternatif.

$$\text{Les Gains Financiers FE(ss,as)} = \\ EP(as)-EP(ss)-CC(ss,as) - (EP(as)*PY(as))*(ETT(as)-ETT(ss)-CT(ss,as))$$

La première partie de la formule calcule le Prix Estimé du profil alternatif moins le Prix Estimé du profil source, moins le Coût de Construction.

La deuxième partie de la formule estime l'impact sur les gains du temps pour atteindre une transaction. Elle multiplie le Prix Estimé par le Rendement de la Propriété et par la variation de temps pour atteindre une transaction. Cette variation de temps est le Temps Estimé de Transaction du profil d'offre alternatif moins le Temps Estimé de Transaction du profil d'offre source moins le temps de construction. Tous les temps ont les mêmes unités.

L'Effort de Construction CE(ss,as) $\in$ [0, $\infty$[ estime l'effort de l'utilisateur d'offre ou le promoteur immobilier pour construire ou rénover la propriété. L'utilisateur d'offre est intéressé de minimiser cet effort.

Le Facteur d'Effort EF est le facteur du Coût de Construction CC(ss,as) pour estimer l'Effort de Construction CE(ss,as).

Par conséquent, l'Effort de Construction CE(ss,as)=EF*CC(ss,as)

Les poids de pertinence d'offre sont WSR1, WSR2.

La Pertinence d'Offre SR(ss,as) combine les Gains Financiers et l'Effort de Construction :

$$SR(ss,as)= \frac{WSR1*Fonction(FE(ss,as))+WSR2*Fonction(CE(ss,as))}{WSR1+WSR2}$$

SR(ss,as) $\in$ [0, 1]

Le système ne considère que les Gains Financiers positifs pour l'évaluation de la variation de Pertinence d'Offre. La valeur de la Pertinence d'Offre augmente lorsque la valeur des Gains Financiers augmente. La fonction(FE(ss,as)) convertit les Gains Financiers FE de l'intervalle [0, $\infty$[ vers l'intervalle [0, 1] avec une forme similaire à la fonction **205** décrite dans la FIG.8.

Comme le montre la **FIG.13,** la Fonction(CE(ss,as)) **246** convertit l'Effort de Construction de l'intervalle [0, $\infty$[ vers l'intervalle [0, 1]. La valeur de pertinence d'offre diminue lorsque l'Effort de Construction augmente. La fonction commence à 1 pour une petite valeur de CE(ss,as) parce qu'il n'y a pas d'Effort de Construction. Puis elle diminue linéairement pour une valeur de CE(ss,as) plus grande et suit une diminution asymptotique autour de 0 pour une valeur très grande de CE(ss,as).

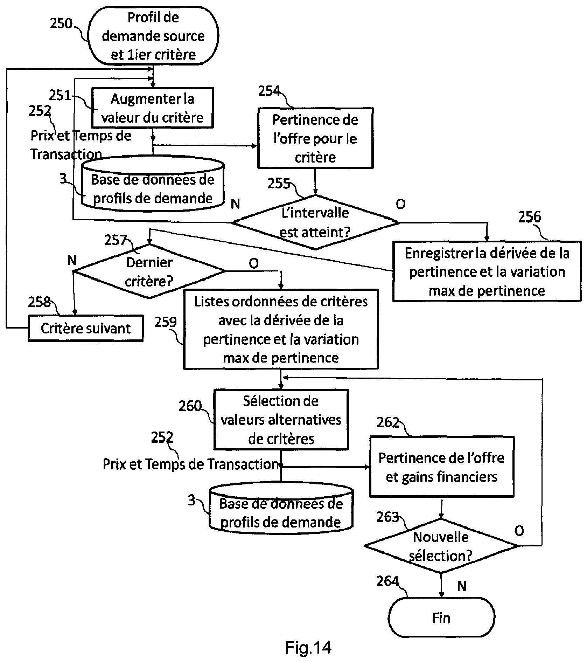

Comme le montre la **FIG.14,** une méthode pour améliorer la valorisation immobilière pour l'utilisateur d'offre suit les étapes suivantes : le système commence avec le profil d'offre source et le premier critère **250** qui peut impacter la valorisation immobilière (i.e. clé en main, rénovation nécessaire, économie d'énergie, nombre de pièces, de chambres, de salles de bains, piscine, parking, garage, qualité, calme, sécurité de la maison, adapté aux séniors, adapté aux enfants). Il associe à chaque critère un intervalle de valeurs autour de la valeur source, un pas d'évaluation, et initialise la valeur la plus basse de l'intervalle.

Il augmente la valeur du critère avec le pas prédéfini à l'étape **251**.

Il exécute les algorithmes d'Estimation de Prix, de Temps de Transaction **252** entre le nouveau profil d'offre recommandé et la base de données de profils de demande **3**. Il génère une valeur de pertinence de critère d'offre **254**.

Le système teste si l'intervalle est atteint **255**. S'il n'est pas atteint, il revient à l'étape **251** pour continuer d'augmenter d'un pas prédéfini la valeur du critère. S'il est atteint, il enregistre la valeur de la dérivée de pertinence à la valeur source du critère, la valeur du critère qui fournit la pertinence maximale dans l'intervalle, et la variation maximale de pertinence entre la valeur source du critère et la valeur qui fournit la pertinence maximale dans l'intervalle **256**.

Le système teste si le dernier critère qui peut impacter la valorisation immobilière a été atteint **257**.

S'il n'a pas atteint le dernier critère, il sélectionne le critère suivant **258,** et revient à l'étape **251**.

S'il a atteint le dernier critère, il affiche le profil d'offre recommandé à l'utilisateur d'offre, il enregistre et affiche une liste ordonnée décroissante de critères conformément aux valeurs de dérivée de pertinence maximale associées, et une liste ordonnée décroissante de critères conformément aux valeurs de variation de pertinence maximale associées, la dérivée maximale de pertinence de valeurs de variables des critères, la variation de pertinence maximale des critères, et la valeur des critères associés **259.**

L'utilisateur d'offre sélectionne les critères qu'il veut changer et les valeurs de ces critères **260.**

Le système exécute les algorithmes d'Estimation de Prix et de Temps de Transaction **252** entre le nouveau profil d'offre recommandé et la base de données de profils de demande **3.** Il génère une valeur de pertinence d'offre expliquée plus haut, et enregistre les valeurs d'Estimation de Gain Financiers, de Prix Estimé, de Coût de Rénovation, de Temps de Rénovation, et de Temps de Transaction **262.** L'utilisateur d'offre a le choix de continuer la sélection de valeurs alternatives de critères **263** et de revenir à l'étape **260,** ou d'arrêter la sélection et de terminer **264** le processus de recommandation d'offre.

Si la propriété n'est pas construite, l'utilisateur d'offre peut être un constructeur immobilier qui a besoin de recommandations pour optimiser les caractéristiques des lots à construire, et la répartition des lots.

L'objectif des recommandations pour promoteur immobilier est de recommander des caractéristiques de lots qui correspondent à des profils de lots et des répartitions de lots qui maximisent la pertinence de la construction par rapport au marché, et les gains pour le promoteur immobilier.

Le système utilise une méthode heuristique basée sur les algorithmes d'Estimation de Prix, le Temps de Transaction, les coûts et les temps de construction, les caractéristiques des projets enregistrés dans la base de données de profils de demande, et des propriétés enregistrées dans la base de données de profils d'offre.

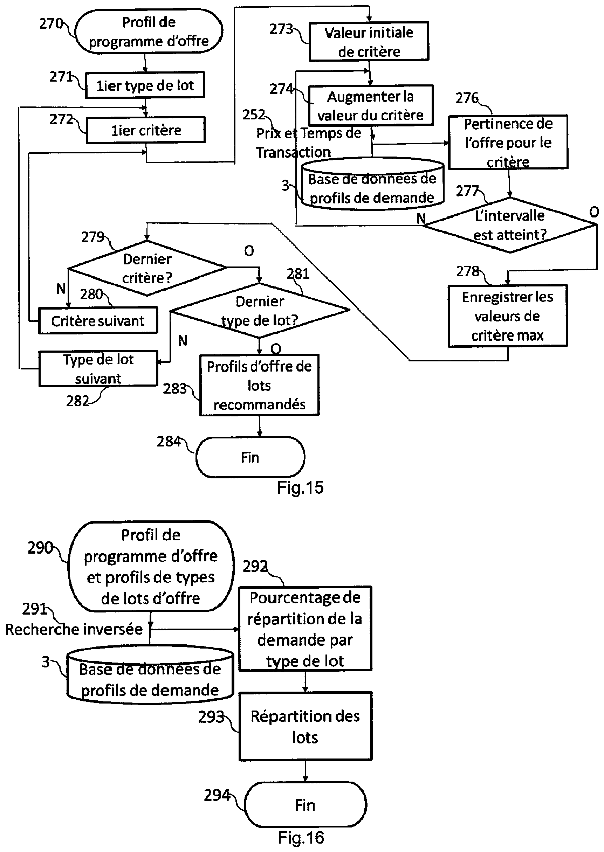

Comme le montre la **FIG.15,** une méthode pour optimiser les caractéristiques des lots pour le promoteur immobilier suit les étapes suivantes : le promoteur immobilier renseigne le profil de l'ensemble du programme immobilier **270** (i.e. surface habitable globale, surface des lots, localisation), la liste des types de lots qu'il envisage, et les valeurs sources des critères de profil d'offre pour chaque lot.

Le système sélectionne le premier type de lot **271** (i.e. studio).

Il sélectionne le premier critère **272** qui peut impacter le programme de construction (i.e. économie d'énergie, piscine, parking, garage, qualité, calme, sécurité, adapté aux séniors, adapté aux enfants).

Il associe à chaque critère un intervalle de valeurs autour de la valeur source, un pas prédéfini d'évaluation, et initialise la valeur la plus basse de l'intervalle **273.**

Il augmente la valeur du critère avec le pas prédéfini à l'étape **274.**

Il exécute les algorithmes d'Estimation de Prix et de Temps de Transaction **252** entre le nouveau profil d'offre recommandé et la base de données de profils de demande **3.** Il génère une valeur de pertinence de critère d'offre **276.**

Le système teste si l'intervalle est atteint **277.** S'il n'est pas atteint, il revient à l'étape **274** pour continuer d'augmenter d'un pas prédéfini la valeur du critère. S'il est atteint, il enregistre les valeurs des critères qui fournissent la pertinence maximale dans l'intervalle **256.**

Il teste si le dernier critère qui peut impacter le programme de construction a été atteint **279.**

S'il n'a pas atteint le dernier critère, il sélectionne le critère suivant **280,** et revient à l'étape **273.**

S'il a atteint le dernier critère, il teste si le dernier type de lot a été traité **281.**

S'il n'a pas traité le dernier type de lot, il sélectionne le prochain type de lot **282** et revient à l'étape **272.**

S'il a traité le dernier type de lot, il enregistre les profils d'offre recommandés **283** pour chaque type de lot avec les valeurs de critères qui optimisent la pertinence d'offre et termine **284** le traitement.

A ce moment, le promoteur immobilier a le choix de sélectionner les valeurs recommandées des critères ou des valeurs alternatives qui conviennent à son projet comme décrit dans la dernière partie de l'organigramme de la FIG.14.

Le promoteur immobilier a aussi besoin d'optimiser la répartition des lots à partir de la connaissance des caractéristiques des propriétés d'offre et des projets de demande dans la localisation.

Le système utilise une méthode heuristique basée sur l'algorithme de score et des caractéristiques des projets enregistrés dans la base de données des profils de demande.

Comme le montre la **FIG.16,** une méthode pour optimiser la répartition des lots pour le promoteur immobilier suit les étapes suivantes : le promoteur immobilier renseigne les profils du programme immobilier (i.e. surface habitable globale, surface des lots, localisation), la liste des types de lots qu'il a choisie, et les profils de chaque type de lot **290.**

Le système exécute une recherche inversée **291** entre chaque profil du type de lot et la base de données des profils de demande **3,** et construit le pourcentage de répartition de la demande par type de lot **292.**

Il exécute une méthode algébrique conforme à l'état de l'art fournissant la répartition des lots à l'étape **293,** qui est aussi proche que possible du pourcentage de répartition de la demande dans la localisation et termine **294** le traitement.

**Revendications**

1.  Procédé de génération de recommandations pour un moteur de recherche d'un serveur web accédant à au moins une base de données (108) de produits/services commercialisés, ladite base de données au moins comprenant une première base de données de produits/services commercialisés et une deuxième base de données d'utilisateurs, lesdits utilisateurs surfant sur le serveur web dans le but d'obtenir une liste de produits/services commercialisés extraits de ladite base de données (108) ;

Le procédé comportant les étapes :

- générer un profil d'offre dédié à un produit/service compris dans ladite première base de données de produits/services commercialisés et décrivant ledit produit/service commercialisé, ledit profil d'offre incluant un ensemble prédéfini de critères et de données affectées auxdits critères ;
- générer un profil de demande dédié à un utilisateur potentiel ou un acquéreur potentiel de produits/services commercialisés compris dans ladite deuxième base de données et décrivant les besoins dudit utilisateur ou acquéreur potentiel pour son projet, ledit profil de demande incluant ledit ensemble prédéfini de critères et de données affectées auxdits critères ;
- exécuter un algorithme de score entre un profil de demande particulier et un profil d'offre particulier, ledit algorithme générant un score de transaction qui est représentatif du niveau de correspondance dudit profil de demande particulier avec ledit profil d'offre particulier ;

dans lequel ledit processus comprend de plus les étapes de :

a) modifier automatiquement les données attribuées à au moins un critère d'un profil d'offre ou de demande de manière à générer un profil modifié d'offre ou de demande ;
b) appliquer ledit algorithme de score audit profil d'offre ou de demande modifié avec des profils de demande ou d'offre extraits de ladite deuxième ou première base de données, respectivement, de manière à générer un score amendé représentatif de l'association avec ledit profil d'offre ou de demande modifié ;
c) enregistrer le résultat dudit algorithme de score ;
d) réitérer lesdites étapes a)-c) pour des modifications supplémentaires desdits profils d'offre ou de demande et pour des critères additionnels.

2. Le procédé selon la revendication 1, **caractérisé en ce que** ledit profil d'offre ou de demande est affiché à un utilisateur avec des recommandations concernant lesquelles données des critères devrait être améliorés pour maximiser ledit score de transaction.

3. Le procédé selon les revendications 1 ou 2, **caractérisé en ce que** ledit algorithme de score est configuré pour générer un niveau de pertinence pour un profil d'offre et/ou de demande donné, respectivement en ce qui concerne les projets de demande enregistrés dans ladite seconde base de données et/ou les propriétés d'offre enregistrées dans ladite première base de données.

4. Le procédé selon les revendications 1 à 3, dans lequel le niveau de pertinence est une pertinence de demande intégrant un nombre limité des scores les plus élevés entre le profil de demande et les profils d'offre des propriétés enregistrées dans ladite première base de données.

5. Le procédé selon les revendications 1 à 3, dans lequel le niveau de pertinence est une pertinence d'offre combinant les gains financiers qui sont attendus d'être aussi élevés que possible et l'effort de construction ou rénovation qui est attendu d'être aussi bas que possible.

6. Le procédé selon les revendications 1 à 2, comprenant en outre les étapes de :

- générer un profil de zone source dédiée à un acheteur de propriété éventuel comprenant des données à attribuer à un ensemble de critères pour transaction, décrivant les caractéristiques de la zone source ;
- générer un profil de zone alternative ;
- générer un score de zone entre un profil particulier de zone source et un profil particulier de zone alternative révélateur du niveau d'association entre le profil de zone source et le profil de zone alternative ;

dans lequel ledit processus établit une liste de zones alternatives ayant les scores de zones les plus élevés.

7. Le procédé selon les revendications 6, dans lequel ledit processus établit une liste de zones alternatives ayant la pertinence de demande la plus élevée.

8. Le procédé selon les revendications 1 à 2, dans lequel ladite donnée modifiée augmente la distance de la localisation source jusqu'à un seuil où le niveau de la pertinence de la demande ou la distance maximale est atteinte.

9. Le procédé selon les revendications 1 à 3, dans lequel lesdites données modifiées résultent d'une variation de la valeur d'un critère à l'intérieur d'un intervalle autour de la valeur source du critère qui fournit la variation de la pertinence positive maximale.

10. Le procédé selon les revendications 1 à 9, dans lequel ledit processus établit une liste de critères avec une variation maximale de pertinence de demande, ou une valeur maximale de dérivée de pertinence de demande.

11. Le procédé selon les revendications 1 à 10, dans lequel ledit processus calcule la valeur du critère à l'intérieur d'un intervalle autour de la valeur source du critère qui fournit la variation maximale positive de pertinence d'offre.

12. Le procédé selon les revendications 1 à 11, dans lequel ledit processus établit une liste de critères avec une variation maximale de pertinence d'offre ou une dérivée maximale de pertinence d'offre.

13. Le procédé selon les revendications 1 à 12, dans lequel ledit algorithme de score est appliqué à un profil de programme immobilier décrivant les caractéristiques d'un programme immobilier et des lots aux fins d'optimiser ladite pertinence des lots pour le promoteur immobilier.

14. Le procédé selon les revendications 1 à 13, dans lequel ledit algorithme de score est appliqué pour estimer le pourcentage de répartition de la demande par type de lots basé sur le pourcentage de répartition de la demande dans la localisation pour chaque lot spécifique.

15. Un système pour un site Web pour la mise en oeuvre du procédé de la revendication 1, qui comprend :

- une application d'offre qui permet à un propriétaire d'offrir un produit ou service à la vente ou à la location ;
- une application de demande qui permet à un utilisateur d'acheter ou louer les produits/services commercialisés ;
- une première base de données de produits/services commercialisés ; et
- une deuxième base de données d'utilisateurs ou acheteurs souhaitant acheter ou louer lesdits produits/services commercialisés ;
- des moyens pour générer un profil d'offre dédié à un produit/service inclu dans ladite première base de données et qui est offert à la vente ou à la location et décrivant ledit un produit/service d'offre à la vente ou à la location, ledit profil d'offre contenant un ensemble prédéfini de critères et de données affectées auxdits critères ;
- des moyens pour générer un profil de demande dédié à un utilisateur ou acheteur d'un produit/service potentiel inclus dans ladite seconde base de données et décrivant les besoins dudit utilisateur ou acheteur d'un produit/service pour son projet, ledit profil de demande inclut ledit ensemble prédéfini de critères et de données affectées auxdits critères ;
- des moyens pour exécuter un algorithme de score entre un profil particulier de demande et un profil particulier d'offre, ledit algorithme de score générant un score de transaction qui soit représentatif du niveau de correspondance dudit profil de demande particulier avec ledit profil d'offre particulier ;

dans lequel, le système comprend :

a) des moyens pour modifier automatiquement les données attribuées à au moins un critère d'un profil d'offre ou de demande de manière à générer un profil modifié d'offre ou de demande ;
b) des moyens pour appliquer l'algorithme de score audit profil d'offre ou de demande modifié avec des profils de demande ou d'offre extraits de ladite deuxième ou première base de données respective, de manière à générer un score modifié représentatif dudit profil d'offre ou de demande modifié ;
c) des moyens pour enregistrer le résultat dudit algorithme de score ;
d) des moyens pour réitérer lesdites étapes a)-c) pour des modifications supplémentaires desdits profils d'offre ou de demande et pour des critères additionnels.

EP 3 229 197 A1

**Utilisateur de demande**
Projet
Besoins et désirs
Critères de sélection

**Utilisateur d'offre**
Propriété
Intérêt du Marché
Prix Estimé

Fig.1A

Fig.1B

20

Début — 50

Enregistrement — 51

Création de propriété — 52

Expérience — 53

Fermeture de propriété — 54

Désenregistrement — 55

Fin — 56

Fig.2A

Début — 60

Enregistrement — 61

Création de projet — 62

Expérience — 63

Fermeture de projet — 64

Dés-enregistrement — 65

Fin — 66

Fig.2B

70 — Facteurs et critères de profils

| Finance | Agencement | Style | Emplacement | Bien-être |
|---|---|---|---|---|
| Prix / budget | Surface habitable | Moderne | Localisation | Qualité |
| Type de propriété | Surface terrain | Classique | Proximité du centre ville | Calme |
| | Pièces | Régional | | Vue agréable |
| Charges basses | Chambres | Rustique | Proximité de nature | Orientation agréable |
| Nouvelle construction | Salles d'eau | Architecte | Proximité des transports publics | |
| | Type de cuisine | | | Etage agréable |
| Clé en main | Jardin | | Proximité écoles | |
| Besoin de rénovation | Piscine | | Proximité commerces | Sécurité |
| | Terrasse | | | Adapté aux séniors |
| Economie d'énergie | Parking | | Proximité d'un site d'intérêt | |
| Rendement potentiel | Garage | | Quartier chic | Adapté aux enfants |
| | | | Quartier abordable | |
| Faible budget par m² | | | | |

71 72 73 74 75

Fig.3

| | |
|---|---|
| Création de projet | 62 |
| Mise à jour du profil | 171 |
| Déclenchement de la recherche | 172 |
| Pré-sélection des propriétés | 175 |
| Score d'association | 176 |
| Sélection finale des propriétés | 177 |
| Montrer les résultats: annonces, scores, confiance des profils | 178 |

Fig.4

Fig.5

Fig.6

Fig.7A

EP 3 229 197 A1

Fig.7B

Fig.8

Fig.9

24

223 — Profil de demande source

224 — Profil de demande augmenté d'un pas de distance

215 — Score de transaction

2 — Base de données de profils d'offre

225 — Pertinence de la demande pour la distance

226 — Distance max ou pertinence max?

N

O

227 — Distance alternative recommandée

Fig.10

230 — Profil de demande source et 1ier critère

231 — Augmenter la valeur du critère

215 — Score de transaction

2 — Base de données de profils d'offre

232 — Pertinence de la demande pour le critère

233 — L'intervalle est atteint?

N     O

236 — Enregistrer la dérivée de la pertinence et la variation max de pertinence

237 — Dernier critère?

N     O

238 — Critère suivant

239 — Listes ordonnées de critères avec la dérivée de la pertinence et la variation max de pertinence

Fig.11

240 — Profil de demande recommandé

241 — Sélection de valeurs alternatives de critères

242 — Afficher les résultats de recherche

215 — Score de transaction

2 — Base de données de profils d'offre

243 — Nouvelle sélection?

O

244 — Fin

N

Fig.12

100%

Fonction (CE(ss,as))

246

0

Effort de Construction CE(ss,as)

Fig.13

250 — Profil de demande source et 1ier critère

251 — Augmenter la valeur du critère

252 — Prix et Temps de Transaction

3 — Base de données de profils de demande

254 — Pertinence de l'offre pour le critère

255 — L'intervalle est atteint?

N     O

256 — Enregistrer la dérivée de la pertinence et la variation max de pertinence

257 — Dernier critère?

N     O

258 — Critère suivant

259 — Listes ordonnées de critères avec la dérivée de la pertinence et la variation max de pertinence

260 — Sélection de valeurs alternatives de critères

252 — Prix et Temps de Transaction

3 — Base de données de profils de demande

262 — Pertinence de l'offre et gains financiers

263 — Nouvelle sélection?

O

N

264 — Fin

Fig.14

27

270 Profil de programme d'offre

271 1ier type de lot

272 1ier critère

273 Valeur initiale de critère

274 Augmenter la valeur du critère

252 Prix et Temps de Transaction

3 Base de données de profils de demande

276 Pertinence de l'offre pour le critère

277 L'intervalle est atteint?

N          O

278 Enregistrer les valeurs de critère max

279 Dernier critère?

N          O

280 Critère suivant

281 Dernier type de lot?

N          O

282 Type de lot suivant

283 Profils d'offre de lots recommandés

284 Fin

Fig.15

290 Profil de programme d'offre et profils de types de lots d'offre

291 Recherche inversée

3 Base de données de profils de demande

292 Pourcentage de répartition de la demande par type de lot

293 Répartition des lots

294 Fin

Fig.16

Europäisches
Patentamt

European
Patent Office

Office européen
des brevets

# RAPPORT DE RECHERCHE EUROPEENNE

Numéro de la demande

EP 17 16 5626

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2014/289070 A1 (COPLEY BRYAN K [US]) 25 septembre 2014 (2014-09-25) * le document en entier * ----- | 1-15 | INV. G06Q30/06 G06Q50/16 |
| X | US 2014/358943 A1 (RAYMOND LEONARD G [US] ET AL) 4 décembre 2014 (2014-12-04) * le document en entier * ----- | 1-15 | |

DOMAINES TECHNIQUES RECHERCHES (IPC)

G06Q

Le présent rapport a été établi pour toutes les revendications

| Lieu de la recherche | Date d'achèvement de la recherche | Examinateur |
|---|---|---|
| La Haye | 22 mai 2017 | Fernández Ferreira |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
    .................................................................................
& : membre de la même famille, document correspondant

EPO FORM 1503 03.82 (P04C02)

**EP 3 229 197 A1**

## ANNEXE AU RAPPORT DE RECHERCHE EUROPEENNE
## RELATIF A LA DEMANDE DE BREVET EUROPEEN NO.

EP 17 16 5626

22-05-2017

| Document brevet cité au rapport de recherche | Date de publication | Membre(s) de la famille de brevet(s) | Date de publication |
|---|---|---|---|
| US 2014289070 A1 | 25-09-2014 | AUCUN | |
| US 2014358943 A1 | 04-12-2014 | AUCUN | |

EPO FORM P0460